# EUROPÄISCHE PATENTSCHRIFT

(11) **EP 1 852 333 B1**
(45) Veröffentlichungstag und Bekanntmachung des Hinweises auf die Patenterteilung: **30.09.2009**
(21) Anmeldenummer: 07004845.9
(22) Anmeldetag: 09.03.2007
(51) Int. Cl.: B62D 25/14

(54) **Querträgeranordnung für ein Kraftfahrzeug**
Cross member assembly for a motor vehicle
Agencement de traverse pour véhicule automobile

(30) Priorität: 05.05.2006 DE 10620947
(43) Veröffentlichungstag der Anmeldung: 07.11.2007
(73) Patentinhaber: Dr. Ing. h.c. F. Porsche Aktiengesellschaft, 70435 Stuttgart (DE)
(72) Erfinder: Meier, Steffen, 74392 Freudental (DE)

(56) Entgegenhaltungen:
- EP-A- 1 388 487
- EP-A2- 1 059 221
- WO-A-01/74648
- US-A- 5 564 769

## Beschreibung

Die vorliegende Erfindung betrifft eine Querträgeranordnung für ein Kraftfahrzeug, mit einem Grundträger zur Aufnahme von Funktionselementen und einem Karosseriequerträger, gemäß dem Oberbegriff des Anspruchs 1.

Derartige Querträgeranordnungen erstrecken sich beispielsweise zwischen zwei seitlichen Randbereichen, insbesondere zwischen den beiden vorderen A-Säulen quer zur Fahrzeuglängsachse. An der Querträgeranordnung sind Funktionselemente, wie beispielsweise eine Lenksäule sowie Halter für weitere Instrumente, insbesondere eine Instrumententafel, befestigt. Ein Grundträger ist dabei üblicherweise an einem Karosseriequerträger, beispielsweise einem Windlauf, unter der Windschutzscheibe abgestützt. Um die erforderliche Steifigkeit bereitstellen zu können, werden üblicherweise sogenannte Konsolen oder Streben verwendet, welche jedoch aufwändig und teuer sind und darüber hinaus häufig ein erhebliches Gewicht aufweisen.

Aus der DE 102 36 524 A1 ist eine Querträgeranordnung für ein Fahrzeug bekannt, wobei ein Grundträger zumindest teilweise zugfest gehalten ist. Hierdurch sollen die sich eigentlich widersprechenden Anforderungen, nämlich die Reduzierung des hohen Gewichts bei gleichzeitig hinreichender Steifigkeit erfüllt werden.

Aus der DE 200 08 201 U1 ist ein Instrumententafelträger in hybridartiger Bauweise zur Eingliederung zwischen den A-Säulen eines Kraftfahrzeuges bekannt. Dabei weist der Instrumententafelträger einen länglichen, schalenartigen Grundkörper sowie stabilisierende Einlegeteile aus metallischen Werkstoffen auf, welche durch eine angespritzte innere Kunststoffverrippung zu einem Metall/Kunststoffverbundteil gefügt sind.

Aus der US 5,564,769 A die den Oberbegriff des Anspruchs 1 bildet, ist eine Querträgeranordnung für ein Kraftfahrzeug mit einem Grundträger zur Aufnahme von Funktionselementen und einem Karosserieträger bekannt, wobei der Grundträger über Halteelemente am Karosserieträger befestigt ist und die Halteelemente einen gestuften Verbindungsbereich aufweisen, der am Karosseriequerträger verbunden wird. Die Halteelemente untergreifen den Grundträger derart, dass sich zwangsläufig die gestufte Verbindung ergibt.

Schließlich sind aus der DE 198 30 303 A1, der DE 102 14 473 A1, der EP 1 136 345 A1, der DE 203 08 895 U1, der DE 100 25 981 A1, der WO 03/031746 A2, der US 6,827,393 B2, der US 2005/0134090 A1 sowie der US 2002/0105204 A1 weitere Querträger für Kraftfahrzeuge bekannt.

Die vorliegende Erfindung beschäftigt sich mit dem Problem, die Querträgeranordnung der eingangs erwähnten Art zu verbessern oder zumindest eine andere Ausführungsform anzugeben.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, einen Grundträger einer Querträgeranordnung über Halteelemente mit einem gestuften, insbesondere zweischnittige, Verbindungsbereich am Karosseriequerträger anzubinden. Der Grundträger dient dabei zur Aufnahme von Funktionselemente, während der Karosseriequerträger beispielsweise als Windlauf ausgestaltet ist. Zur einerseits leichten und andererseits steifen Verbindung des Grundträgers mit dem Karosseriequerträger sind an den zwischen den beiden Trägern angeordneten Halteelementen, karosseriequerträgerseitig jeweils gestufte Verbindungsbereiche vorgesehen, die mit einem komplementär dazu am Karosseriequerträger ausgebildeten Verbindungsbereich verbunden sind. Die gestuften Verbindungsbereiche weisen dabei jeweils zumindest zwei Stufenflächen auf, welche aneinander anliegen. Über die gestufte Verbindung zwischen den Haltelementen und den Karosseriequerträger wird eine besonders verwindungssteife Verbindung zwischen den beiden erreicht, wodurch auch eine am Grundträger angeordnete Instrumententafel steif am Karosseriequerträger gehalten wird. Die zweischnittig ausgebildete Verbindung erleichtert darüber hinaus die Montage des Grundträgers mit den daran angeordneten Haltelementen am Karosseriequerträger, so dass auch eine Reduzierung der Montagekosten bzw. der Montagezeit erzielt werden kann. Darüber hinaus weisen die derartig ausgestalteten Halteelemente ein vergleichsweise geringes Gewicht aus, wodurch das gesamte Gewicht des mit der erfindungsgemäßen Querträgeranordnung ausgestatteten Kraftfahrzeuges reduziert werden kann und dadurch ein positiver Einfluss auf die Energiebilanz des Fahrzeuges erzielt werden kann.

Bei einer bevorzugten Weiterbildung der erfindungsgemäßen Lösung sind zwei Haltelemente über eine Verbindungskonsole in Fahrzeugquerrichtung miteinander verbunden. Dies bewirkt eine Aussteifung der beiden Halteelemente in Fahrzeugquerrichtung und dadurch eine verbesserte, da steifere Anbindung des Grundträgers an den Karosseriequerträger. Darüber hinaus kann vorgesehen sein, dass die Verbindungskonsole komplementär zur Außenkontur des Grundträgers ausgebildete Ausnehmungen aufweist, in welche der Grundträger formschlüssig eingreift. Eine derartige Ausnehmung kann beispielsweise eine Nut bzw. eine Aufnahme sein, welche den Grundträger zumindest teilweise umschließt bzw. umgreift und dadurch diesen zuverlässig mit dem Haltelement verbindet. Ergänzend hierzu kann der Grundträger mit den Halteelementen verschweißt, verlötet oder verklebt sein.

Zweckmäßig ist der Grundträger über eine Strebe am Längsmitteltunnel des Kraftfahrzeugs befestigt. Hierdurch wird der Grundträger an einem zusätzlichen Karosserieteil abgestützt, wodurch sich eine besonders steife und zuverlässige Verbindung zwischen dem Grundträger und der Kraftfahrzeugkarosserie ergibt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen. Dabei zeigen, jeweils schematisch,
- Fig.: 1 eine erfindungsgemäße Querträgeranordnung,
- Fig.: 2 eine Explosionsdarstellung eines Grundträgers mit Halteelementen,
- Fig.: 3 eine Querschnittsdarstellung eines Halteelementes.

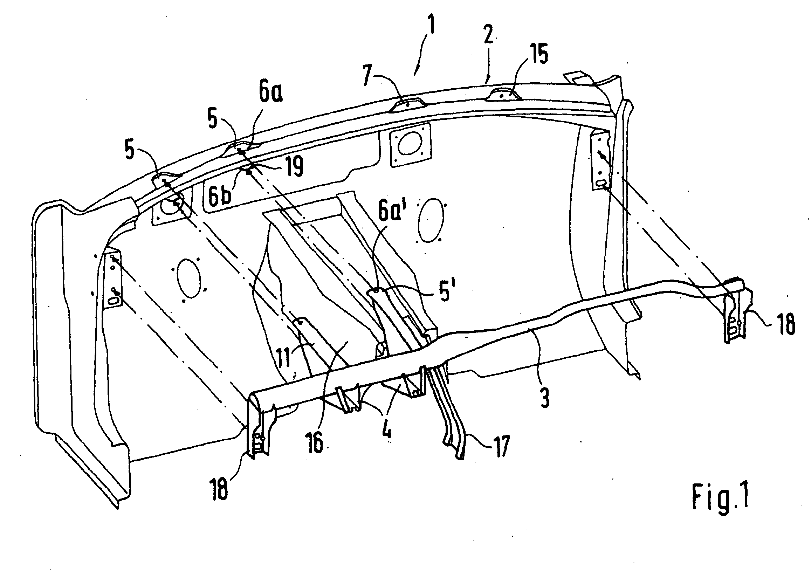

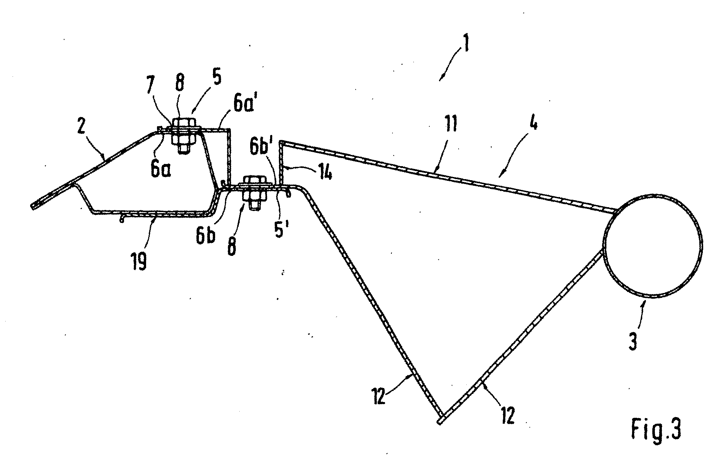

Entsprechend Fig. 1 weist ein nur teilweise dargestelltes Kraftfahrzeug eine Querträgeranordnung 1 mit einem Karosseriequerträger 2, einem Grundträger 3 sowie Halteelementen 4 auf. Der Grundträger 3 ist dabei zur Aufnahme von nicht gezeigten Funktionselementen, wie beispielsweise einer Instrumententafel, ausgebildet. Der zur Querträgeranordnung 1 gehörende Karosseriequerträger 2 bildet gemäß Fig. 1 einen Windlauf unterhalb einer nicht dargestellten Windschutzscheibe und verläuft im wesentlichen quer zur Fahrzeuglängsrichtung zwischen zwei ebenfalls nicht dargestellten A-Säulen des Kraftfahrzeuges. Der Grundträger 3 ist darüber hinaus über die Haltelemente 4 am Karosseriequerträger 2 befestigt und zwar über eine jeweils zweischnittige Verbindung. Zur Darstellung der zweischnittigen Verbindung weisen die Haltelemente 4 jeweils karosseriequerträgerseitig einen gestuften Verbindungsbereich 5' auf (vgl. Fig. 3), der mit einem komplementär dazu am Karosseriequerträger 2 ausgebildeten Verbindungsbereich 5 verbunden ist. Dabei besitzen sowohl die Verbindungsbereiche 5' an den Haltelementen 4 als auch die Verbindungsbereiche 5 am Karosseriequerträger 2 jeweils zumindest zwei Stufenflächen 6a, 6b, 6a', 6b', wie dies insbesondere in Fig. 3 dargestellt ist. Bei vollständig montierter Querträgeranordnung 1 liegen dabei die jeweiligen Stufenflächen 6a', 6b' der Haltelemente 4 an den zugehörigen Stufenflächen 6a, 6b des Karosseriequerträgers 2 an.

Um eine zuverlässige Verbindung zwischen den Halteelementen 4 und damit dem Grundträger 3 und dem Karosseriequerträger 2 zu gewährleisten, sind in den jeweiligen Stufenflächen 6a, 6b, 6a', 6b' der Halteelemente 4 und des Karosserieträgers 2 Durchgangsöffnungen 7 vorgesehen, die bei mit dem Karosserieträger 2 verbundenen Haltelementen 4 fluchtend zueinander angeordnet sind und zwar derart, dass Verbindungsmittel 8, beispielsweise Schrauben, durch die fluchtenden Durchgangsöffnungen 7 hindurchsteckbar sind (vgl. Fig. 3).

Wie weiter in Fig. 1 gezeigt, sind die beiden exemplarisch dargestellten Halteelemente 4 über eine Verbindungskonsole 9 in Fahrzeugquerrichtung miteinander verbunden, wobei die Verbindungskonsole 9 grundträgerseitig Ausnehmungen 10 aufweist, welche vorzugsweise komplementär zur Außenkontur des Grundträgers 3 ausgebildet sind. Die derart ausgebildeten Ausnehmungen 10 erlauben ein formschlüssiges Eingreifen des Grundträgers 3 in die Ausnehmungen 10. Dabei wird der Grundträger 3 vorzugsweise von den Ausnehmungen 10 der Halteelemente 4 zumindest teilweise umgriffen, so dass eine zuverlässige und lagefixierte Halterung des Grundträgers 3 in den Ausnehmungen 10 gewährleistet ist. Zusätzlich kann vorgesehen sein, dass die Haltelemente 4 mit dem Grundträger 3 anderweitig verbunden, insbesondere verklebt, verlötet oder verschweißt sind.

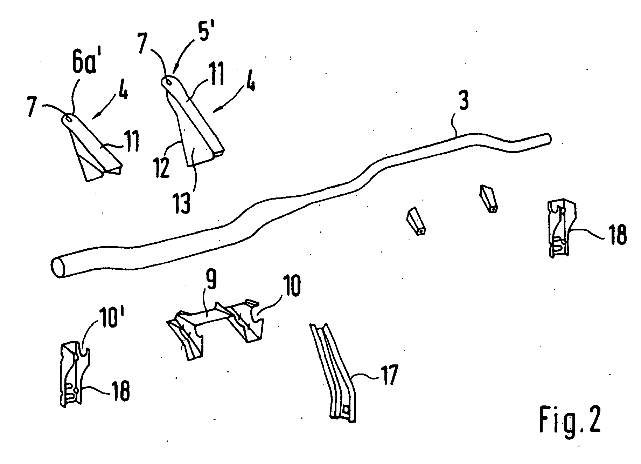

Gemäß Fig. 3 weist das im Querschnitt dargestellte Haltelement 4 einen Obergurt 11, einen Untergurt 12, sowie ein in Fig. 2 dargestelltes Aussteifungselement 13 auf. Dabei ist das Aussteifungselement 13 zwischen dem Obergurt und dem Untergurt 12 angeordnet und versteift diese gegeneinander. Hierbei ist besonders vorteilhaft, dass die Haltelemente 4 aus mehreren einzelnen Bauteilen zusammengesetzt sind und dadurch besonders leichte Halteelemente 4 bereit gestellt werden können. Insbesondere ist es möglich, den Obergurt 11 und/oder den Untergurt 12 als bandförmige Gurte auszubilden, welche über ein beispielsweise zweiwandiges Aussteifungselement 13, steif miteinander verbunden sind. Die derart zusammengesetzten Halteelemente 4 besitzen bei geringem Gewicht eine hohe Biegesteifigkeit in die Hauptbelastungsrichtungen.

Wie weiter in Fig. 3 gezeigt, bildet der Obergurt 11 karosseriequerträgerseitig eine erste Stufenfläche 6a' und der Untergurt 12 ebenfalls karosseriequerträgerseitig eine zweite Stufenfläche 6b'. Um das Verbindungsmittel 8 in die Durchgangsöffnung 7 der zweiten Stufenfläche 6b' einführen zu können, ist zwischen dem Obergurt 11 und dem Untergurt 12 ein Hülsenelement 14 angeordnet, das fluchtend zur Durchgangsöffnung 7 in der zweiten Stufenfläche 6b' ausgerichtet ist.

Um die zweite Stufenfläche 6b' des Verbindungsbereiches 5' des Halteelementes 4 mit dem Karosseriequerträger 2 zu verbinden, sind an dem Karosseriequerträger 2 Laschenelemente 19 angeordnet, die die Stufenfläche 6b des karosseriequerträgerseitigen Verbindungsbereiches 5 bilden. Die Laschenelemente 19 können dabei in geeigneter Weise, insbesondere durch eine Verklebung, eine Verlötung oder eine Verschweißung mit dem Karosseriequerträger 2 verbunden sein.

Gemäß Fig. 1 sind am Karosseriequerträger 2 Vertiefungen 15 zu erkennen, in welche jeweils eine Stufe 6a' des Verbindungsbereiches 5' des jeweiligen Halteelementes 4 derart eingreift, dass eine versenkte Anordnung der Stufe 6a' in der Vertiefung 15 entsteht. Dabei dient die Vertiefung 15 zusätzlich als Montagehilfe, welche eine exakte Positionierung des Haltelementes 4 bzw. der jeweiligen Stufe 6b, 6b' des Verbindungsbereichs 5' am Karosseriequerträger 2 erleichtert. Vorzugsweise ist dabei die Vertiefung 15 derart auf eine Bauhöhe des Obergurtes 11 bzw. der Stufe 6a' abgestimmt, dass bei in die Vertiefung 15 eingelegtem Obergurt 11 eine fluchtende, das heißt durchgehende Oberfläche entsteht.

Zusätzlich zu der Befestigung des Grundträgers 3 über die Halteelemente 4 am Karosseriequerträger 2 sind weitere Befestigungen an einem Mitteltunnel 16 (vgl. Fig. 1) und an einem Längsendbereich des Grundträgers 3 vorgesehen. Die Befestigung des Grundträgers 3 am Längsmitteltunnel 16 des Kraftfahrzeuges erfolgt dabei über eine Strebe 17 (vgl. Fig. 2, welche vorzugsweise mit dem Grundträger 3 verschweißt bzw. verlötet und mit dem Längsmitteltunnel 16 verschraubt ist. Die längsendseitige Befestigung des Grundträgers 3 an einer nicht dargestellten A-Säule des Kraftfahrzeuges kann dabei über jeweils eine Konsole 18 entweder direkt oder indirekt erfolgen. Die Konsole 18 weist ähnlich den Haltelementen 4 eine zur Außenkontur des Grundträgers 3 komplementär ausgebildete Ausnehmung 10' auf, in welche der Grundträger 3 vorzugsweise formschlüssig eingreift. Denkbar ist hierbei auch, dass die Konsole 18 mit dem Grundträger 3 anderweitig verbunden, insbesondere verklebt, verlötet oder verschweißt.

Um individuellen Anforderungen der Fahrzeugtypen an eine Innenraumgestaltung Rechnung tragen zu können, ist der Grundträger 3 als bereichsweise gekrümmtes Tragrohr ausgebildet und ermöglicht dadurch einen Raumgewinn für Fahrzeuginsassen. Da auch im Bereich der Längserstreckung des Grundträgers 3 unterschiedlich große Belastungen aufgenommen werden müssen, beispielsweise im Bereich einer Lenksäule, weist der Grundträger 3 einen in Längsrichtung variierenden Querschnitt auf (vgl. Fig. 2), wodurch er beispielsweise unterschiedlichen Biegebelastungen Rechnung trägt.

Sowohl die Haltelemente 4 als auch die Strebe 17 bzw. die Konsolen 18 oder die Laschenelemente 19 sind vorzugsweise als Blechformteile ausgebildet, welche sich einfach und kostengünstig herstellen lassen und zugleich ein geringes Gewicht aufweisen, was sich positiv auf die Energiebilanz des Fahrzeuges auswirkt.

## Patentansprüche

1. Querträgeranordnung (1) für ein Kraftfahrzeug mit einem Grundträger (3) zur Aufnahme von Funktionselementen und einem Karosseriequerträger (2), insbesondere einem Windlauf, wobei der Grundträger (3) über Halteelemente (4) am Karosseriequerträger (2) befestigt ist und die Halteelemente (4) karosserieträgerseitig einen gestuften Verbindungsbereich (5') aufweisen, der mit einem komplementär dazu am Karosseriequerträger (2) ausgebildeten Verbindungsbereich (5) verbunden ist und in den Halteelementen (4) und im Karosseriequerträger (2) jeweils fluchtende Durchgangsöffnungen für Schrauben (8) vorgesehen sind und in den Halteelementen (4) und im Karosserieträger (2) jeweils in den Durchgangsöffnungen (7) Schrauben vorgesehen sind, **dadurch gekennzeichnet, dass** die Halteelemente (4) eine gestufte Verbindung zum Karosseriequerträger (2) aufweisen und jeweils einen Obergurt (11) und einen Untergurt (12) sowie ein dazwischen angeordnetes Aussteifungselement (13) umfassen, welches zwischen dem Obergurt (11) und dem Untergurt (12) angeordnet ist und dass der Obergurt (11) eine erste Stufenfläche (6a') und der Untergurt (12) eine zweite Stufenfläche (6b') zur Verbindung mit gegenüberstehenden Flächen (6a und 6b) am Karosseriequerträger (2) bildet und dass karosserie quer trägerseitig zwischen dem Obergut (11) und dem Untergurt (12) ein Hülsenelement (14) angeordnet ist, welches fluchtend zu einer Durchgangsöffnung für die Schraube (8) und der zweiten Stufenfläche (6b') ausgerichtet ist und dass in der ersten Stufenfläche (6a') eine weitere Durchgangsöffnung (7) für die Schraube (8) zur Befestigung am Karosseriequerträger (2) angeordnet ist.

2. Querträgeranordnung nach Anspruch 1, **dadurch gekennzeichnet, dass** zwei Halteelemente (4) über eine Verbindungskonsole (9) in Fahrzeugquerrichtung miteinander verbunden sind und dass die Verbindungskonsole (9) komplementär zur Außenkontur des Grundträgers (3) ausgebildete Ausnehmungen (10) aufweist, in welche der Grundträger (3) formschlüssig eingreift.

3. Querträgeranordnung nach den Ansprüchen 1 oder 2, **dadurch gekennzeichnet, dass** der Karosseriequerträger (2) Vertiefungen (15) aufweist, in welche jeweils eine erste Stufenfläche (6a') des Halteelements (4) derart eingreift, dass eine versenkte Anordnung zur Verbindung mit dem Karosseriequerträger (2) entsteht und dass am Karosseriequerträger (2) Laschenelemente (19) angeordnet sind, welche die Stufenfläche (6b) des karosserieseitigen Verbindungsbereichs für die zweite Stufenfläche (6b') am Untergurt bilden.

4. Querträgeranordnung nach den Ansprüchen 1 bis 3, **dadurch gekennzeichnet, dass** der Grundträger (3) über eine Strebe (17) am Längsmitteltunnel des Kraftfahrzeugs befestigt ist.

5. Querträgeranordnung nach einem der Ansprüche 1 bis 4, **dadurch gekennzeichnet, dass** der Grundträger (3) endseitig über jeweils eine Konsole (18) über eine Gegenkonsole an einer A-Säule des Kraftfahrzeugs befestigt ist und dass die Konsole (18) eine zur Außenkontur des Grundträgers (3) komplementär ausgebildete Ausnehmung (10') aufweist, in welche der Grundträger (3) formschlüssig eingreift.

## Claims

1. Crossmember arrangement (1) for a motor vehicle with a basic member (3) for receiving functional elements, and a body crossmember (2), in particular a cowl, the basic member (3) being fastened to the body crossmember (2) via holding elements (4) and the holding elements (4) having, on the body crossmember side, a stepped connecting region (5') which is connected to a connecting region (5) which is designed in a complementary manner thereto on the body crossmember (2) and respectively aligned passage openings for screws (8) being provided in the holding elements (4) and in the body crossmember (2), and screws being provided in the holding elements (4) and in the body crossmember (2) in each case in the passage openings (7), **characterized in that** the holding elements (4) have a stepped connection to the body crossmember (2) and each comprise a top chord (11) and a bottom chord (12) and a stiffening element (13) which is arranged therebetween and is arranged between the top chord (11) and the bottom chord (12), and **in that** the top chord (11) forms a first stepped surface (6a') and the bottom chord (12) forms a second stepped surface (6b') for connection to opposing surfaces (6a and 6b) on the body crossmember (2), and **in that** a sleeve element (14) is arranged on the body crossmember side between the top chord (11) and the bottom chord (12) and is aligned with a passage opening for the screw (8) and with the second stepped surface (6b'), and **in that** a further passage opening (7) for the screw (8) for fastening to the body crossmember (2) is arranged in the first stepped surface (6a').

2. Crossmember arrangement according to Claim 1, **characterized in that** two holding elements (4) are connected to each other in the transverse direction of the vehicle via a connecting bracket (9), and **in that** the connecting bracket (9) has recesses (10) which are designed in a complementary manner to the outer contour of the basic member (3) and in which the basic member (3) engages with a form fit.

3. Crossmember arrangement according to Claim 1 or 2, **characterized in that** the body crossmember (2) has depressions (15) in which a first stepped surface (6a') of the holding element (4) engages in each case in such a manner that a recessed arrangement for connection to the body crossmember (2) is produced and tab elements (19) are arranged on the body crossmember (2) and form the stepped surface (6b) of the connecting region on the body crossmember side for the second stepped surface (6b') on the bottom chord.

4. Crossmember arrangement according to Claims 1 to 3, **characterized in that** the basic member (3) is fastened to the longitudinal centre tunnel of the motor vehicle via a strut (17).

5. Crossmember arrangement according to one of Claims 1 to 4, **characterized in that** the basic member (3) is fastened on the end side via a respective bracket (18) via a mating bracket to an A-pillar of the motor vehicle, and **in that** the bracket (18) has a recess (10') which is of complementary design to the outer contour of the basic member (3) and in which the basic member (3) engages with a form fit.

## Revendications

1. Agencement de traverse (1) pour un véhicule automobile comprenant un support de base (3) pour recevoir des éléments fonctionnels et une traverse de carrosserie (2), en particulier un tablier, le support de base (3) étant fixé par le biais d'éléments de retenue (4) sur la traverse de carrosserie (2) et les éléments de retenue (4) présentant, du côté de la traverse de carrosserie, une région de connexion étagée (5'), qui est connectée à une région de connexion (5) réalisée de manière complémentaire à celle-ci sur la traverse de carrosserie (2), et des ouvertures de passage pour des vis (8) étant prévues à chaque fois en alignement dans les éléments de retenue (4) et dans la traverse de carrosserie (2), et des vis étant prévues à chaque fois dans les ouvertures de passage (7) dans les éléments de retenue (4) et dans la traverse de carrosserie (2), **caractérisé en ce que** les éléments de retenue (4) présentent une connexion étagée à la traverse de carrosserie (2) et comprennent à chaque fois une sangle supérieure (11) et une sangle inférieure (12) ainsi qu'un élément de rigidification intermédiaire (13), qui est disposé entre la sangle supérieure (11) et la sangle inférieure (12) et **en ce que** la sangle supérieure (11) forme une première surface étagée (6a') et la sangle inférieure (12) forme une deuxième surface étagée (6b') pour la connexion à des surfaces opposées (6a et 6b) sur la traverse de carrosserie (2), et **en ce que** du côté de la traverse de carrosserie, entre la sangle supérieure (11) et la sangle inférieure (12), on dispose un élément de douille (14) qui est orienté en alignement avec une ouverture de passage pour la vis (8) et avec la deuxième surface étagée (6b'), et **en ce que** dans la première surface étagée (6a') est disposée une autre ouverture de passage (7) pour la vis (8) pour la fixation sur la traverse de carrosserie (2).

2. Agencement de traverse selon la revendication 1, **caractérisé en ce que** deux éléments de retenue (4) sont connectés l'un à l'autre par le biais d'une console de connexion (9) dans la direction transversale du véhicule, et **en ce que** la console de connexion (9) présente des évidements (10) réalisés de manière complémentaire au contour extérieur du support de base (3), dans lesquels le support de base (3) vient en prise par engagement par correspondance géométrique.

3. Agencement de traverse selon la revendication 1 ou 2, **caractérisé en ce que** la traverse de carrosserie (2) présente des renfoncements (15) dans lesquels à chaque fois une première surface étagée (6a') de l'élément de retenue (4) vient en prise de telle sorte qu'un agencement renfoncé pour la connexion à la traverse de carrosserie (2) soit formé, et **en ce que** des éléments de patte (19) sont disposés sur la traverse de carrosserie (2), lesquels forment la surface étagée (6b) de la région de connexion du côté de la traverse de carrosserie pour la deuxième surface étagée (6b') sur la sangle inférieure.

4. Agencement de traverse selon les revendications 1 à 3, **caractérisé en ce que** le support de base (3) est fixé par le biais d'un montant (17) sur le tunnel médian longitudinal du véhicule automobile.

5. Agencement de traverse selon l'une quelconque des revendications 1 à 4, **caractérisé en ce que** le support de base (3) est fixé du côté de l'extrémité par le biais d'une console respective (18) par le biais d'une console conjuguée à une colonne A du véhicule automobile et **en ce que** la console (18) présente un évidement (10') réalisé de manière complémentaire au contour extérieur du support de base (3), dans lequel le support de base (3) vient en prise par engagement par correspondance géométrique.
